Europäisches Patentamt

European Patent Office

Office européen des brevets

(19)

(11) **EP 1 003 334 A2**

(12) **EUROPEAN PATENT APPLICATION**

(43) Date of publication:
**24.05.2000 Bulletin 2000/21**

(51) Int Cl.⁷: **H04N 7/26**

(21) Application number: **99440306.1**

(22) Date of filing: **10.11.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **20.11.1998 IT TO980977**

(71) Applicant: **ALCATEL
75008 Paris (FR)**

(72) Inventors:
• **Cucchi, Silvio
20083 Gaggiano (Milano) (IT)**
• **Mir, José
20040 Bellusco (Milano) (IT)**

(74) Representative:
**Schmidt, Werner Karl, Dipl.-Phys. et al
Alcatel
Intellectual Property Department, Stuttgart
Postfach 30 09 29
70449 Stuttgart (DE)**

(54) **Method for reducing code artifacts in block coded video signals**

(57)     A method for reducing code artifacts in block coded video signals, in particular MPEG signals, which provides for executing a post-elaboration step after the reception and decoding of a video signal, said post-elaboration step comprising the steps of taking a first projection in a determined space of a digital image belonging to the video signal and operating on said first projection. According to the present invention said post-elaboration step provides for: a) constructing said first projection (DCT1) of said digital image (IM0) in a determined space; b) constructing within the same space at least a second projection (DCT2) of a modified image obtained from the digital image (IM0); c) reducing the norm distance between said first projection (DCT1) and said second projection (DCT2).

Fig. 1

## Description

The present invention relates to a method for reducing code artifacts in block coded video signals, in particular MPEG signals, which provides for executing a post-elaboration step subsequent to the reception and decoding of a video signal, said post-elaboration step comprising the steps of taking a first projection in a determined space of a digital image belonging to the video signal and operating on said first projection.

Digital block-coding techniques are becoming more and more important in modern technology related to signal processing, in particular to image coding, in order to reach a high compression degree of the information to be transferred for digital transmission.

MPEG (Moving Picture Expert Group) digital compression standard, for instance, is a widely spread standard, which is based on the image decomposition in 16x16 luminance sample blocks, whereto two 8x8 chrominance samples blocks are associated with. In turn, a matrix with 16x16 luminance samples consists of four matrixes with 8x8 blocks. The latter blocks are the data units elaborated by the compression algorithms. Said compression algorithms carry out the coding by using the known Discrete Cosine Transform (DCT).

Obviously, such a coding operation through transform requires the use of transform coefficients. Said transform coefficients undergo a discretization process during elaboration, i.e. they are quantized. Said quantization substantially introduces additive noise, which will result in the final image with the presence of artifacts due to the coding operation. In particular, said artifacts appear as visible borders between the blocks of the final reconstructed image.

In order to remove said artifacts it is known to use conventional post-elaboration techniques executed at the image receiver, such as a Low Pass Filtering, LPF or "a posteriori" maximum techniques.

However, said techniques have several drawbacks. Since they are based on a post-elaboration in the spatial domain, i.e. operating on a non-transformed image, a main drawback is that they require to know in advance some parameters peculiar to the image, e.g. the continuity of the image intensity. Additionally, many of these techniques require such an amount of elaboration time that prevent from elaborating the video signal in real time.

Other methods are also known, which perform on the contrary a post-elaboration on the transformed image, based on the assumption that the quantization error on the transform coefficients originates the artifacts. For instance, a publicationn by S.O. Choy, Y.H. Chan W.C. Siu *'Reduction of Block-Transform Image Coding Artifacts by Using Local Statistics of Transform Coefficients',* IEEE Signal Processing Letters, vol. 4, No.1, Jan. 1997, describes a reduction method of the artifacts caused by transform coefficients quantization based on a least squares estimation of the transform coefficients performed on their quantized versions.

Said method requires evaluation of local statistical parameters of the quantized coefficients, such as mean and variance; however, its drawback is to require that information on quantizers is known at the receiver, i.e. both the step and quantization method employed in the transmission. Therefore said information must be expressly available at the receiver.

It is the object of the present invention to solve the above drawbacks and provide a method for reducing code artifacts in block coded video signals, in particular MPEG signals, which has a more efficient and improved performance.

In this frame, it is the main object of the present invention to provide a method for reducing code artifacts in block coded video signals, in particular MPEG signals, which does not require the knowledge of quantizers at the receiver.

A further object of the present invention is to provide a method for reducing code artifacts in block coded video signals, in particular MPEG signals, which allows elaboration of the video signal in real time.

The above objects are obtained by a method for reducing code artifacts in block coded video signals, in particular MPEG signals, and/or a decoding device of block coded video signals incorporating the features of the annexed claims, which form an integral part of the description herein.

Further objects, features and advantages of the present invention will become apparent from the following detailed description and annexed drawings, which are supplied by way of exemplifying and non limiting example, wherein:

- Fig. 1 shows a basic diagram of a method for reducing code artifacts in block coded video signals, in particular MPEG signals, according to the present invention; and

- Fig. 2 shows a detail of the block diagram represented in figure 1.

For clarity's sake we are now defining some terms and symbols used in the following description.

A digital image x consisting of $N \times N$ blocks, with N as an integer number, is dealt with as an array $N^2 \times 1$. Therefore, the transformation matrix T is a matrix $N^2 \times N^2$, operating the following transformation:

$$Y = Q[Tx],$$

where Y is the quantized coefficient array and Q[] a matricial operator representing the quantization process.

It can be seen, then, that the quantized coefficients array Y can be rewritten as:

$$Y=X+n,$$

where X is the transformed array of the digital image x and n the additive noise introduced by quantization.

Since the additive noise introduced by the quantization n is unknown, a perfect reconstruction of the transformed array of the digital image X is not possible. Therefore, the problem will be to research a better estimation of the transformed array of the digital image X, i.e. an estimation array F.

Calling M the mean value of the transformed array of the digital image X, and W a weight matrix, it will be easy to verify that the estimation array F can be expressed as:

$$F=M+W(Y-M).$$

Using the least squares methods and choosing diagonal the weight matrix W for simplicity, it can be demonstrated that the optimum for a weight $w_i$ belonging to the weight matrix W is according to the following expression:

$$w_i=\sigma^2_{x_i}/(\sigma^2_{x_i}+\sigma^2_{n_i}),$$

where $\sigma^2$ is the variance of the quantity taken into consideration (X for the transformed array of the digital image x, n for the additive noise introduced by quantization).

Moreover, without any prejudice to generality, it can be assumed that $M=E[X]=E[Y]$,

i.e. the mean value of the transformed array of the digital image X and of the quantized coefficients array Y coincide (assuming the additive noise introduced by quantization n to be a zero mean ergodic noise).

As a result, the previous formula will be:

$$F=E[Y] + W(Y-E[Y]).$$

Since $Y=X+n$, it is also $\sigma^2_Y = \sigma^2_x + \sigma^2_n$.

Then, it is obvious that the variance of the additive noise introduced by quantization will be $\sigma^2_n=q^2/12$, being q the quantization step; due to stability reasons of the system it is also demonstrated (the article by Choy should be consulted for further details) that each weight $w_i$ of the weight matrix W has to respect to the following condition:

$$w_i>1-q_i/2|Y_i-E[Y_i]|.$$

Therefore:

$$F_i = E[Y_i] + w_i(Y_i-E[Y_i])$$

with $w_i = \max\{1- \sigma^2_n/\sigma^2_Y;\ 1 - q_i/2|Y_i-E[Y_i]|\}$.

From the foregoing it results that a perfect estimation (in the sense previously specified) of the transformed array of the digital image X starting from a quantized version of it can be obtained taking the statistics of the quantized image, i.e. the quantized coefficients array Y, and comparing it with the amplitude of the additive noise introduced by the quantization n.

However, an estimation of the transformed array of the digital image X can also be obtained without the knowledge of the quantizer, estimating the quantization noise on the base of either a higher or lower spatial coherence of the image as obtained by a statistical investigation.

If any block decomposition in a non coded image allows verification of the spatial coherence (at least locally) of the information contained in it, this is no longer true for a coded image.

The method for reducing code artifacts in block coded video signals, in particular MPEG signals, according to the present invention, is based on the assumption that coded blocks taken as homogeneous groups (i.e. adjacent), retain the features of the original image, whereas a block subdivision differing from the coding subdivision will show a different behaviour due to quantization.

The method for reducing code artifacts in block coded video signals, in particular MPEG signals, developed according to the present invention, will iteratively change the image until both subdivision behaviours coincide.

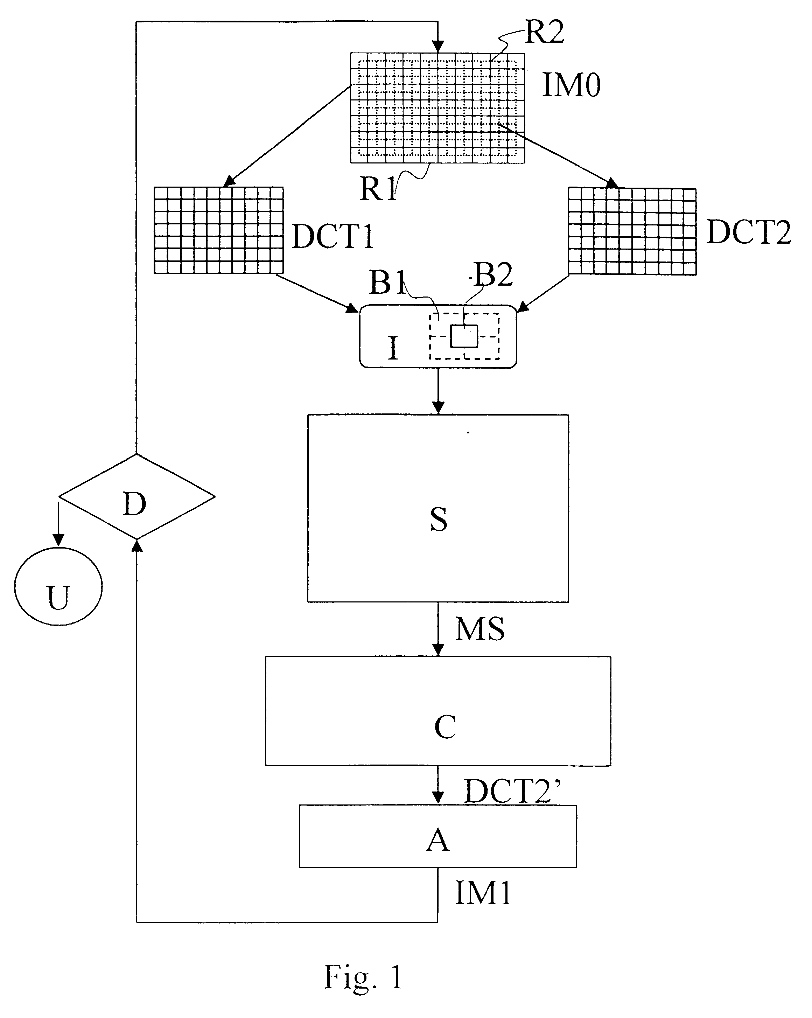

Figure 1 shows a block diagram representing the method for reducing code artifacts in block coded video signals, in particular MPEG signals, according to the present invention.

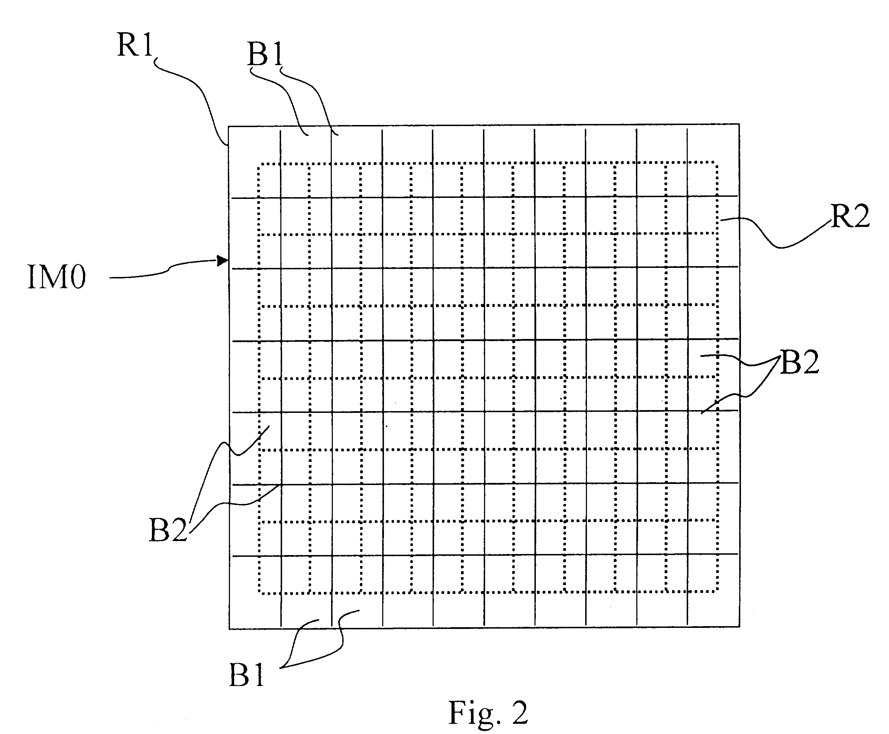

Therefore a digital image IM0 is represented, which is subdivided by a grid R1 in blocks B1 and coded by DCT coding in a transformed image DCT1, consisting of transformed blocks B1. Moreover, a different subdivision is applied to the image IM0 by a displaced grid R2, represented by dashed line, that originates blocks B2. Said displaced grid R2 is displaced with respect to the grid R1, as it can be better appreciated in Fig. 2, so that each block B2 will cover the area identified by the corners of four adjacent blocks B1. Thus, a transformed image DCT2 consisting of displaced transformed blocks B2 is obtained from the image IM0 subdivided by the displaced grid R2.

Therefore, an iteration block I is provided, which considers each displaced transformed block B2 sequentially and executes operations as foreseen by a following statistical block S.

As a result, calculation of a mean value array M and standard deviation array a of the spectral components of transformed blocks B1 corresponding to the blocks B1 adjacent to one same displaced block B2 is executed in the statistical block S.

Moreover, also the mean value m and standard deviation σ of the previously calculated spectral components of the same displaced transformed block B2 are calculated.

As a result, the statistical block S will output an array MS containing both the mean value m and standard deviation a calculated with respect to all displaced transformed blocks B2 and related to all transformed blocks B1 due to the choice of the grid B2.

Said array MS is inputted into a correction block C, wherein some weights $w_i$ of the weight matrix W and the components $f_i$ of the estimation array F are calculated, the latter approximating the displaced transformed image DCT2 according to the following equations:

$$f_i=(f_i-m_i)*w_i+m_i \qquad (1)$$

$$w_i=min(max(\sigma_1/\sigma_2;\sigma_1/|sp_i-m_i|);1) \qquad (2)$$

if ($f_i < m_i$) then

$$sp_i = m_2 - \sigma_2 \text{ else } sp_i = m_2 + \sigma_2 \qquad (3)$$

The symbol sp indicates a corrected frequency, similar to the frequency f, but displaced by +σ or -σ according to equation (3).

As it can be seen, weights $w_i$ are chosen through the equation (2) to let the standard deviation represented by the expression ($sp_i-m_i$) of the components of the estimation array F converge to the value of the standard deviation $\sigma_1$ associated with the transformed image DCT1.

Thus, a corrected displaced transformed image DCT2' is obtained and inserted in an anti-transformation block A, which will in fact execute the inverse DCT transform and reconstruct a corrected image IM1. Finally, a decisional block D controls whether to execute a new elaboration of the corrected image IM1 or end the elaboration and send the corrected image IMI to an output U. Said decisional block D will send the corrected image IM1 to the output U when the standard deviation ($f_i-m_i$) goes below a preset value.

Therefore, the post-elaboration process carried out will substantially consist in:

a) constructing a first projection, i.e. the transformed image DCT1 in a determined space, namely the domain of the DCT transform, of the digital image IM0 to be elaborated; in the specific event the DCT transform is applied according to a first block subdivision grid R1;

b) constructing a second projection, i.e. the displaced transformed image DCT2 in said determined space of the same but adequately modified digital image IM0; in this instance modification means the application of a different grid R2 operating a second block subdivision differing from the first one;

c) measuring the distance between the first projection and the second projection defining a proper norm, such as the standard deviation ($f_i-m_i$), apt to measure said distance between the first projection and the second projection;

d) reducing the distance between the first projection and the second projection, by adequately modifying the coefficients of said projections, in the specific according to equations (1), (2) and (3);

e) projecting in the starting space the second modified projection again, i.e. a corrected displaced transformed image DCT2', thus obtaining a corrected digital image IM1; and

f) repeating steps a) to f), using the corrected image IM1 instead of the digital image IM0, until a condition, eg. related to the value taken by the standard deviation ($f_i-m_i$) is verified.

The method for reducing code artifacts in block coded video signals, in particular MPEG signals, as described herein, is based on a subdivision grid R2, which is diagonally displaced with respect to the grid R1 of distance substantially equal to half the diagonal of each block B1 or B2.

On the other hand, the grid R2 can be displaced in several ways. For instance, grid R2 displacement can be alternatively fractionated in submultiple length displacements of the diagonal length. Each displacement of a submultiple length corresponds to an iteration producing a new corrected digital image IM1, until it will incrementally reach a total displacement equal to half the diagonal of each block B1 or B2.

From the above description the features of the present invention appear clear and also its advantages are obvious.

The method for reducing code artifacts in block coded video signals, in particular MPEG signals, allows favourable execution of a post-elaboration of the digital image in the transform domain, where information already available at the post-elaborator are used for such a post-elaboration, i.e. post-elaboration will specifically operate several times on the same digital image.

According to the present invention, the method for reducing code artifacts in block coded video signals, in particular MPEG signals, can also be applied in real time, since statistical operations required are extremely simple and fast also in the hypothesis of performing many iterations of the procedure, since they do not introduce any delays in the transmission of video images.

It is obvious that many changes are possible for the man skilled in the art to the method for reducing code artifacts in block coded video signals, in particular MPEG signals, described above by way of example, without departing from the novelty spirit of the innovative idea, and it is also clear that in practical actuation of the invention the forms of the details may differ from the ones described and be replaced with technical equivalent elements.

It is obvious that transformation will mainly be, though not exclusively, a DCT type, eg. correlation of a subband decomposition can also be to the purpose, whereas the norm distance between the transformed images may differ from the one described, the same as it is for the modifying algorithm of transformed coefficients.

The number of iterations to be executed can be either a fixed one or be decided according to the values taken from the distance between transformed images.

In general it will be possible to apply the method according to the present invention using even more than two transformed images originated from the same digital image through different subdivision grids.

It is obvious that the method described herein shall be used in a decoding device of block coded signals, equipped with adequate calculation means capable of elaborating data with sufficient speed and completeness.

Such a device shall conveniently use one or more microprocessors.

The invention extends to computer program comprising computer program code means adapted to perform all the steps of claim 1 when said program is run on a computer. Furthermore, the invention includes a computer readable medium having a program recorded thereon, said computer readable medium comprising computer code means adapted to perform all the steps of claim 1 when said program is run on a computer.

**Claims**

1. Method for reducing code artifacts in block coded video signals, in particular MPEG signals, which provides for execution of a post-elaboration step after the reception and decoding of a video signal, said post-elaboration step comprising the steps of taking a first projection in a determined space of a digital image belonging to the video signal and operating on said first projection, characterized in that said post-elaboration step comprises the steps of:

    a) constructing said first projection (DCT1) in a determined space of said digital image (IM0);
    b) constructing within the same space at least a second projection (DCT2) of a modified image obtained from the digital image (IM0); and
    c) reducing the norm distance between said first projection (DCT1) and said second projection (DCT2).

2. Method according to claim 1, characterized in that step c) is carried out by modifying an estimation array (F, DCT2') of the second projection (DCT2).

3. Method according to claim 2, characterized in that a modified image (IM1) is reconstructed from the estimation array (F, DCT2').

4. Method according to claim 3, characterized in that steps a) to c) are iterated a preset number of times.

5. Method according to claim 2, characterized in that steps a) to c) are iterated until the norm distance between said first projection (DCT1) and said second projection (DCT2) takes a lower value than a preset threshold value.

6. Method according to claim 5, characterized in that the employed norm [(1), (2), (3)] is a function of a statistical parameters array (MS) of the first projection (DCT1) and second projection (DCT2) coefficients.

7. Method according to claim 4, characterized in that said first projection (DCT1) and second projection (DCT2) are obtained using a respective first subdivision grid (R1) and a respective second subdivision grid (R2).

8. Method according to claim 7, characterized in that the second subdivision grid (R2) defines some blocks (B2) covering the adjacent corners of four blocks (B1) belonging to the first subdivision grid (R1).

9. Method according to claim 8, characterized in that for each block (B2) belonging to the second projection (DCT2), statistical parameters of the block (B2) itself and of the blocks (B1) belonging to the first projection (DCT1) common to said block (B2) are calculated.

10. Method according to claim 7, characterized in that for each iteration the second subdivision grid (R2) is applied to the digital image (IM0) in a position moving incrementally.

11. Method according to claim 7, characterized in that the first projection (DCT1) and second projection (DCT2) are obtained applying the Discrete Cosine Transform to the digital image (IM0).

12. Method according to claim 7, characterized in that the first projection (DCT1) and second projection (DCT2) are obtained employing the correlation of a subband decomposition.

13. Decoding device of block coded video signals using a code artifacts reduction method according to one or more of the previous claims.

**14.** Computer program comprising computer program code means adapted to perform all the steps of claim 1 when said program is run on a computer.

**15.** A computer readable medium having a program recorded thereon, said computer readable medium comprising computer code means adapted to perform all the steps of claim 1 when said program is run on a computer.

Fig. 1

Fig. 2

EP 1 003 334 A2